Europäisches Patentamt

European Patent Office

Office européen des brevets

(11) Numéro de publication: **0 422 970 A1**

## (12) DEMANDE DE BREVET EUROPEEN

(21) Numéro de dépôt: 90402461.9

(22) Date de dépôt: 07.09.90

(51) Int. Cl.5: **C22B 59/00**

(30) Priorité: 13.09.89 FR 8911990

(43) Date de publication de la demande:
17.04.91 Bulletin 91/16

(84) Etats contractants désignés:
AT DE FR GB

(71) Demandeur: RHONE-POULENC CHIMIE
25, quai Paul Doumer
F-92408 Courbevoie Cédex(FR)

(72) Inventeur: Cailly, Francinet
42 à 52, rue Villiers de l'Isle Adam
F-75020 Paris(FR)
Inventeur: Mottot, Yves
14, Avenue Salvador Alliendé
F-93290 Tremblay en France(FR)

(74) Mandataire: Esson, Jean-Pierre et al
RHONE-POULENC CHIMIE Service Brevets
Chimie 25, quai Paul Doumer
F-92408 Courbevoie Cedex(FR)

(54) Procédé de traitement de minerais contenant des terres rares.

(57) L'invention concerne un procedé de traitement de minerais contenant des Terres Rares, consistant à faire une attaque sulfurique du minerai dans un réacteur 1, puis à reprendre la masse d'attaque par une solution aqueuse d'un nitrate de calcium dans un réacteur 3. Après élimination des insolubles en 7, les valeurs terres rares sont récupérées par précipitation dans le réacteur 10 et le filtre 12. La solution aqueuse épurée en terres rares est recyclée dans le réacteur 3 de reprise de la masse d'attaque.

## PROCEDE DE TRAITEMENT DE MINERAIS CONTENANT DES TERRES RARES

La présente invention concerne un procédé de traitement d'un minerai contenant des terres rares.

Actuellement, les principaux minerais de terres rares exploités sont ceux qui contiennent des minéraux porteurs de terres rares tels que monazite, bastnaésite et xénotime. Il existe de nombreux autres minerais dont l'exploitation et le traitement ne sont pas actuellement rentables.

Lorsque le minerai a une teneur faible ou moyenne en éléments terres rares, il est nécessaire de procéder à son enrichissement en le soumettant à un traitement physique : gravimétrie, flottation ou séparation magnétique. Un tel procédé qui s'ajoute au traitement chimique nécessaire pour récupérer les éléments terres rares, peut s'avérer coûteux et grève l'économie du procédé.

Un des objectifs de la présente invention est de fournir un procédé économique de récupération de terres rares à partir du minerai les contenant selon un procédé susceptible notamment d'éviter ou de limiter l'enrichissement préalable dudit minerai.

Un autre objectif de la présente invention est de disposer d'un procédé convenant au traitement de tout type de minerais ou de résidus contenant des éléments terres rares, quelle que soit leur concentration.

L'invention a également pour objectif de fournir un procédé convenant plus particulièrement au traitement des minerais comprenant des composés fluorés de terres rares tels que les minerais de Bastnaésite qui contiennent des fluorocarbonates de terres rares, permettant ainsi d'éliminer le fluor sans nécessité des traitements thermiques à haute température.

A cet effet, l'invention propose un procédé de traitement de minerais contenant des composés de terres rares comprenant les étapes suivantes :

(i) attaque du minerai par de l'acide sulfurique

(ii) addition à la masse d'attaque, en présence d'eau, d'un composé comprenant un cation qui forme avec l'anion sulfate un composé insoluble et un anion formant avec les terres rares un composé soluble ;

(iii) après élimination des insolubles, à récupérer les terres rares.

Selon une caractéristique de l'invention la séparation et la récupération des terres rares sont obtenues par addition d'un composé formant avec celles-ci un composé insoluble.

Ainsi, la solubilisation des terres rares par échange de l'anion sulfate avec un autre anion, comme par exemple les anions nitrate, halogénure, acétate, perchlorate, permet d'éviter la formation de sulfate-double difficilement solubilisable et d'obtenir une récupération quasi totale des terres rares.

Selon une autre caractéristique de l'invention, le composé ajouté à l'étape (ii) est avantageusement un nitrate ou un chlorure tel qu'un nitrate ou chlorure d'alcalino-terreux ou analogue.

Le composé préféré de l'invention, notamment d'un point de vue économique est le nitrate de calcium, ou le chlorure de calcium.

Le composé est mis en oeuvre dans une quantité suffisante pour obtenir une dissolution complète des terres rares, ou plus simplement une précipitation quasiment complète des anions sulfates présents. Ainsi le rapport cation du composé / anion sulfate doit au moins être égal à la stoechiométrie, avantageusement supérieur de 10 % à celle-ci et de préférence présente un excès en cation du sel égal à environ 50 % de la stoechiométrie.

La solution de terres rares est séparée des insolubles par tout procédé classique de séparation solide / liquide, tel que par exemple décantation, filtration, centrifugation ou analogue.

La récupération des terres rares est ensuite obtenue par précipitation sous forme d'un composé insoluble, généralement sous forme d'hydroxydes ou de carbonates. Cette précipitation est obtenue par élévation du pH de la solution par addition d'un composé basique comme un carbonate ou un hydroxyde soluble.

Selon un mode de réalisation préféré de l'invention, cette précipitation est obtenue par addition d'un carbonate ou hydroxyde comprenant au moins le cation du composé ajouté à l'étape (ii) pour le régénérer et le recycler à cette étape (ii). Ainsi, dans le cas où le composé est un nitrate de calcium, on utilisera avantageusement la chaux comme composé basique pour élever le pH de la solution.

Cette caractéristique présente un avantage important d'un point de vue économique et de rejet des effluents. En effet, le recyclage de la solution obtenue après précipitation des terres rares dans l'étape (ii) permet de diminuer voir même de supprimer les effluents liquides et notamment les rejets de composés nitrates. Ainsi, dans le cas de l'utilisation de chaux et de nitrate de calcium, les rejets seront constitués essentiellement de sulfate de calcium et les réactifs consommés seront essentiellement de la chaux et de l'acide sulfurique.

Dans le cas où les terres rares sont précipitées sous forme d'hydroxydes, le pH de la solution est élevé à une valeur supérieure à 6 et avantageusement comprise entre 8 et 10.

Selon une autre caractéristique de l'invention, il est avantageux de réaliser l'élévation du pH de la solution en deux étapes, une première étape au cours de laquelle le pH est élevé jusqu'à une valeur inférieure à 5,5 avantageusement inférieure à 4,5 pour précipiter les éléments autres que les terres rares tels que le fer, l'aluminium, ou analogues.

Cette étape d'élévation du pH de la solution à une valeur inférieure à 5,5 est réalisée soit avant élimination des insolubles, soit après cette élimination. Dans ce dernier mode de réalisation, une étape supplémentaire de séparation des composés insolubles doit être réalisée avant la précipitation des terres rares.

Par ailleurs, lorsque cette étape de précipitation des impuretés n'est pas réalisée, l'élimination de celles-ci peut être obtenue par repulpage du concentré final. Cette étape très coûteuse grève de manière significative l'économie du procédé.

En outre, le procédé de l'invention peut être adapté par choix de l'anion du sel ajouté à l'étape (ii) en fonction des impuretés prépondérantes accompagnant les éléments terres rares.

Ainsi, si le minerai ne contient pas de manganèse ou uniquement dans de très faibles proportions, il sera plus avantageux d'utiliser un chlorure, tel que par exemple le chlorure de calcium, dans l'étape (ii). En effet, le chlorure de calcium est plus économique et moins gênant vis à vis de l'environnement.

Après élimination des matières insolubilisées le pH de la solution est élevé à une valeur supérieure à 6 pour précipiter les éléments terres rares.

Le précipité de terres rares obtenu peut être ensuite traité pour séparer les terres rares entre elles ou pour séparer des mélanges de terres rares selon des procédés bien connus de l'homme du métier.

Ainsi, le précipité de terres rares obtenu après l'étape (iv) est une matière première pour les procédés de séparation de terres rares connus et exploités.

A titre d'exemple, ce précipité peut être repris par un l'acide tel que l'acide chlorhydrique ou nitrique, par exemple, pour obtenir une solution concentrée en sel de terres rares. Les terres rares peuvent alors être séparées par un procédé classique d'extraction liquide / liquide.

Un autre avantage de l'invention réside dans le fait que le procédé permet de traiter tout type de minerais ou de résidus contenant des terres rares.

Le procédé de l'invention peut s'appliquer sur tout type de minerais et, plus particulièrement, aux minerais ayant une faible teneur en terres rares.

Il est évident que l'on ne sortira pas du cadre de la présente invention en opérant sur des concentrés de minerais dont le procédé d'obtention est bien connu, par exemple par enrichissement à l'aide de techniques physiques, broyage et flottation et/ou concentration par gravité sur des tables à secousses et/ou par séparation magnétique et/ou tout autre technique physique ou chimique.

Il est également possible de mettre en oeuvre un minerai ayant subi un prétraitement thermique.

Dans le cas de minerais pauvres en terres rares, on fait appel, de préférence, à un minerai ayant une gangue en partie insoluble dans l'acide sulfurique et l'on peut citer le quartz et les silicates, la magnétite, l'anatase, le rutile, l'ilménite, les grenats et les zircons.

Comme minerais convenant bien à la mise en oeuvre de l'invention, on peut mentionner les minerais dont les porteurs de terres rares sont des phosphates, des fluocarbonates, des carbonates ou des silicates.

A titre d'exemples de minerais, on peut citer les minerais suivants dont on a ci-après précisé la teneur pondérale moyenne en terres rares exprimée en oxydes de terres rares :
- les minerais de type phosphate tels que les apatites où les terres rares sont incluses dans le réseau de phosphate de calcium $Ca_5(PO_4)_3$ (F, Cl, OH) (10 %) ; la rhabdophanite $TRPO_4,H_2O$ (60 %); la monazite $TRPO_4$ (65%).
La churchite $TRPO_4,H_2O$ (50 %) ; la famille des crandallites, par exemple la florencite $TRAl_3(PO_4)_2(OH)_6$ (30 %) ;
- les minerais de type fluocarbonate, par exemple la bastnaésite $TRCO_3F$ (75 %), la synchisite $TRCa(CO_3)_2F$ (52 %) ;
- les minerais de type carbonate, notamment le lanthanite $TR_2(CO_3)_3,8H_2O$ (55 %) ;
- les minerais de type silicate, notamment l'allanite $(TRCa)_2(FeAlMg)_3(SiO_4)(Si_2O_7)O(OH)$ (25 %), la britholite $TR_3Ca_2(SiO_4)_3OH$ (60 %), l'Eudialyte $(Na,Ca)_5 (Zn,Fe,Mn)Si_6O_{17}(O,OH,Cl)$

Le procédé de l'invention convient tout-à-fait bien pour le traitement des minerais du type fluocarbonate.

En effet, Le fluor contenu dans le minerai est libéré lors de l'attaque sulfurique sous forme notamment d'acide fluorhydrique.

Il est également possible de traiter selon le procédé de l'invention, toute forme de résidu qu'il soit sous forme solide ou liquide.

C'est ainsi que l'on peut mettre en oeuvre des résidus contenant des terres rares sous forme salifiée (phosphates, carbonates ou sulfates) ou de résidus (poudres, copeaux, fragments, lingots, poussières, etc...) qui résultent le plus souvent de la fabrication d'aimants du type TR/Co, la terre rare étant essentiellement le samarium ou TR/Fe/B, la terre rare étant essentiellement le néodyme et le pourcentage atomique des éléments étant généralement le suivant : de 8 à 30 % pour la terre rare ; de 2 à 28 % pour le bore et le complément en fer.

Le procédé convient également pour le traitement des résidus de dissolution de gypse, notamment des gypses issus de l'attaque sulfurique des minerais de phosphate, et les boues obtenues lors de l'étape de concentration des acides phosphoriques bruts, ou de désaturation.

Il est également possible de traiter selon le procédé dè l'invention, les rejets d'exploitation des mines de fer contenant encore des oxydes de fer et de l'apatite. Dans pareil cas, il est souhaitable avant de mettre en oeuvre le procédé de l'invention, d'éliminer la magnétite, par séparation magnétique, technique bien connue dans le domaine considéré.

La liste des minerais et résidus cités précédemment n'est en aucun cas limitative. Dans l'exposé qui suit de l'invention, on désignera par "minerai", aussi bien un minerai qu'un résidu contenant des terres rares.

Conformément au procédé de l'invention, on réalise dans l'étape (i) une attaque du minerai à l'aide d'acide sulfurique, par exemple par empâtage ou pulpage du minerai.

Avant l'attaque acide, une opération de concassage et/ou de broyage peut s'avérer intéressante afin de libérer l'espèce minérale porteuse des terres rares. La granulométrie dépend de la maille de libération qui peut varier entre quelques microns généralement 4 à 5 um et 2 mm. Toutefois, si l'on désire une attaque assez rapide, il est avantageux de mettre en oeuvre des particules ayant un diamètre inférieur à 1 mm.

Les opérations de concassage et de broyage peuvent être conduites d'une manière classique, par exemple, dans un concasseur à mâchoires et/ou dans un broyeur à boulets ou à barres monté en circuit ouvert ou formé ou classificateur.

Outre les minéraux porteurs de terres rares, certains minéraux d'impuretés seront également attaqués par l'acide sulfurique. Toutefois, ces impuretés pourront être éliminées au cours du procédé ou dans une étape ultérieure.

L'attaque du minerai est effectuée par de l'acide sulfurique. Pour celle-ci, la concentration de l'acide sulfurique n'est pas critique. Ainsi, on peut utiliser un oléum comme une solution d'acide sulfurique. Dans ce dernier cas, la concentration des solutions d'acide sulfurique est avantageusement comprise entre 45 % et 100 % en poids, de préférence entre 75 % et 95 %.

La quantité d'acide sulfurique utilisée est fonction de la teneur en espèces attaquables par l'acide sulfurique (terres rares et impuretés). Cette quantité est de préférence égale à la quantité stoechiométrique requise pour attaquer les éléments attaquables.

Avantageusement, cette quantité pourra être supérieure à la quantité stoechiométrique requise, cet excès sera, de préférence de l'ordre de 20 %, avantageusement compris entre 5 et 10 %.

Pour améliorer le rendement de l'attaque acide, et notamment la cinétique de cette attaque, il est avantageux de la réaliser à une température supérieure à 100°C pour éliminer l'eau présente et ainsi déplacer l'équilibre. L'attaque pourra être réalisée à une température comprise entre 100°C et 400°C environ.

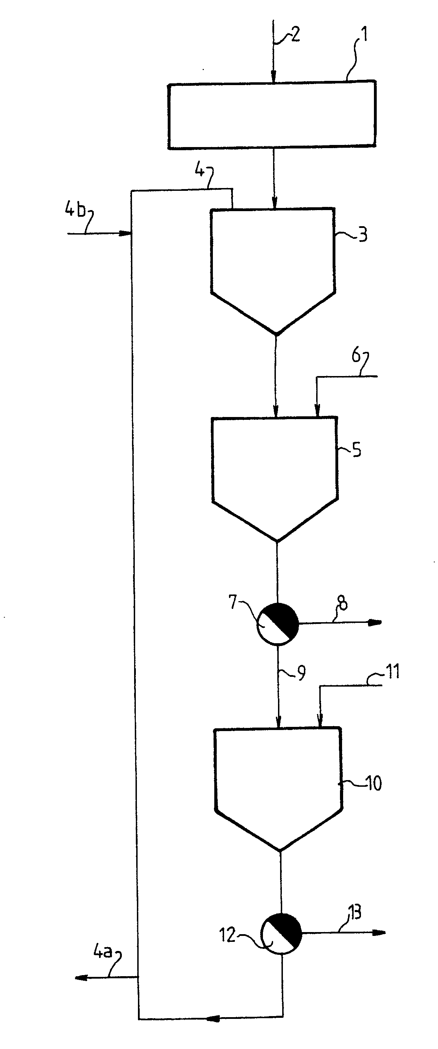

D'autres avantages, détails et buts de l'invention apparaitront plus clairement au vu des exemples donnés ci-dessous à titre indicatif et de la description détaillée d'un mode de réalisation préféré de l'invention faite en référence à la figure unique annexée qui représente un schéma synoptique d'un mode de réalisation préféré de l'invention.

Le procédé de l'invention dans un mode de réalisation préféré, consiste à réaliser dans un réacteur 1 l'empâtage sulfurique d'un minerai de terres rares par addition d'une solution d'acide sulfurique en 2.

Après réaction et attaque par l'acide sulfurique, on ajoute dans un réacteur 3, une solution d'un sel comprenant un cation formant un sulfate insoluble, et un anion formant avec les terres rares un sel soluble, par exemple une solution de nitrate de calcium. Cette addition est réalisée en 4.

Ainsi, dans le réacteur 3, les éléments terres rares sont solubilisés. Le mélange réactionnel ainsi obtenu est introduit dans un réacteur 5. Le pH de ce milieu est alors élevée à une valeur inférieure à 5,5, par exemple 3, par addition de chaux en 6.

Ainsi, les impuretés telles que le fer, l'aluminium, qui ont été solubilisées lors de la reprise par la solution de nitrate de calcium en 3, précipitent, généralement sous forme d'hydroxyde.

Le milieu réactionnel est alors filtré en 7, les insolubles constitués notamment par les matériaux non attaqués par l'acide sulfurique et les impuretés précipitées dans le réacteur 5, sont éliminés en 8.

La phase liquide est alors alimentée en 9 dans un nouveau réacteur 10. Dans ce réacteur 10, le pH de la phase liquide sera élevé à une valeur supérieure à 6, par exemple 8,5, par addition de chaux en 11 pour ainsi obtenir une précipitation des éléments terres rares sous forme d'hydroxyde.

On peut également utiliser un carbonate de calcium pour élever le pH, les terres rares seront alors précipitées sous forme de carbonate.

Le précipité de terres rares est séparé en 12 et récupéré en 13. La phase liquide contenant essentiellement du nitrate de calcium est alors recyclée en 4 dans le réacteur 3.

Bien entendu, le circuit de recyclage de la solution de nitrate de calcium peut comprendre une purge 4a et une alimentation en solution fraiche 4b pour ajuster et contrôler la teneur en nitrate de calcium de la solution et son débit.

La boucle 4 de recyclage de la solution de nitrate de calcium n est pas obligatoire pour le procédé. En effet, il est aisément concevable que la solution ajoutée dans le réacteur 3 peut être une solution fraiche d'un sel et la phase liquide séparée en 12 peut être évacuée comme effluent. Ce mode de réalisation sera notamment utilisé quand le cation du composé ajouté en 4 dans le réacteur 3 est différent du cation du composé utilisé pour élever le pH dans les réacteurs 5 et 10.

Toutefois, le mode de réalisation illustré est préféré car le recyclage de la phase liquide permet de diminuer la quantité d'effluents rejetés.

Il est également aisément compréhensible que la phase liquide recueillie en 12 peut être recyclée totalement ou partiellement.

Par ailleurs, selon la nature des impuretées accompagnant les terres rares, l'élévation du pH réalisée dans le réacteur 5 peut être supprimée, les terres rares étant alors précipitées directement en 10 sans élimination préalable d'impuretés.

Des exemples de réalisation de l'invention sont donnés ci-dessous pour illustrer l'invention, sans pour autant la limiter. Les pourcentages donnés sont exprimés en poids sauf indication contraire.

Exemple 1

100g de minerai presentant une granulométrie moyenne infèrieure à 100 μm et dont la teneur en Terres Rares (exprimée en oxyde, $TR_2O_3$) est de 28 % et qui contient du fluor, du phosphore et de nombreux autres éléments, sont attaqués par 120g d'acide sulfurique à 92% pendant deux heures à 300°C.

Le mélange ainsi obtenu est émotté puis soumis à une lixiviation par deux litres d'une solution de nitrate de calcium à 100g/l.

Cette lixiviation est conduite pendant 1 heure à température ambiante (de l'ordre de 20°C).

Le mélange obtenu en pulpe est alors traité par un lait de chaux contenant 200g/l de CaO, pour obtenir un mélange à pH 3.

Le mélange réactionnel est ensuite filtré et lavé à l'eau.

La solution obtenue contient 13,1g/l de terres rares exprimées en $TR_2O_3$.

Cette solution est chauffée à 80°C et on ajoute un lait de chaux à 200g/l de CaO jusqu'à élévation du pH à 8,5. Les terres rares précipitent sous forme d'hydroxyde et sont récupérées par filtration, lavage à l'eau et séchage à 120°C.

Le procédé permet de récupérer 33,2g de précipité de terres rares ayant la composition suivante :

Terres rares (exprimées en $TR_2O_3$) : 82,1%
Calcium (exprimé en CaO) : 0,8%
Perte au feu à 900°C : 13,1%
Autres : 4,0%

Exemple 2

L'exemple 1 est répété à la différence que la lixiviation de la masse d'attaque est réalisée par une solution de chlorure de calcium à 90g/l.

Dans ces conditions, le procédé permet de récupérer 33,5g de précipité ayant la composition suivante :

Terres rares (exprimé en $TR_2O_3$) : 81,2%
calcium (exprimé en CaO) : 1,0%
Perte au feu à 900°C : 14,0%
Autres : 3,8%

Exemple 3

100g de minerai de granulométrie moyenne inférieure ou égale à 100 μm et contenant 32,8 % de terres rares exprimé en oxyde, du fluor et de nombreux autres éléments sont attaqués par 100g de $H_2SO_4$ à 62% pendant 2 heures à 200°C.

Après émottage de la masse d'attaque, celle-ci est soumise à une lixiviation par 1 litre d'une solution de nitrate de calcium à 200g/l pendant 1 heure à température ambiante.

La pulpe obtenue est traitée par un lait de chaux à 200g/l pour élever le pH à une valeur égale à 3,5 environ.

Après filtration, la solution obtenue contient 30g/l de terres rares exprimées en $TR_2O_3$.

Les terres rares sont précipitées par addition d'un lait de chaux à 200g/l et obtention d'un pH égal à 8,5 environ.

Le précipité de terres rares après filtration, lavage et séchage à la composition suivante :

Terres rares ($TR_2O_3$) : 73,8%
Calcium (CaO) : 0,9%
Perte au feu à 900°C : 16,4%
Autres : 8,9%

Ces précipités de terres rares peuvent être ensuite repris par un acide, par exemple, par l'acide nitrique, pour être utilisés comme matières premières dans les procédés de séparation de terres rares, tels que les procédés d'extraction liquide / liquide.

**Revendications**

1/ Procédé de traitement de minerais contenant des composés de terres rares caractérisé en ce qu'il consiste à :

    (i) attaquer le minerai par de l'acide sulfurique

    (ii) ajouter à la masse d'attaque, en présence d'eau, d'un composé comprenant un cation formant un sulfate insoluble et un anion formant avec les terres rares un sel soluble

    (iii) après élimination des insolubles, à séparer et récupérer les terres rares

2/ Procédé selon la revendication 1, caractérisé en ce que la récupération des terres rares est obtenue par précipitation par l'addition d'un composé formant avec les terres rares un composé insoluble.

3/ Procédé selon la revendication 1 ou 2 caractérisé en ce que dans l'étape (iii) la précipitation des terres rares est obtenue par élévation du pH de la solution à une valeur supérieure à 6, de préférence comprise entre 8 et 10.

4/ Procédé selon la revendication 1 ou 2 ou 3 caractérisé en ce que le composé ajouté à l'étape (ii) est un nitrate ou un chlorure.

5/ Procédé selon l'une des revendications précédentes caractérisé en ce que le composé ajouté à l'étape (ii) est un nitrate ou un chlorure d'alcalinoterreux tel que le nitrate de calcium, ou le chlorure de calcium.

6/ Procédé selon l'une des revendications précédentes, caractérisé en ce que le pH est augmenté par addition d'un hydroxyde ou d'un carbonate.

7/ Procédé selon l'une des revendications précédentes, caractérisé en ce que préalablement à l'étape (iii), le pH de la solution de l'étape (ii) est augmenté à un pH inférieur à 5,5, de préférence inférieur à 4,5.

8/ Procédé selon l'une des revendications précédentes, caractérisé en ce que les insolubles sont éliminés après l'étape (ii).

9/ Procédé selon l'une des revendications précédentes, caractérisé en ce que le minerai est un minerai dont les porteurs de terres rares sont des phosphates, des fluocarbonates, des carbonates ou des silicates ou tout résidu contenant des terres rares sous forme salifiée ou métallique.

10/ Procédé selon l'une des revendications précédentes caractérisé par le fait que le minerai mis en oeuvre est un minerai contenant de l'apatite ou un minerai contenant de la bastnaésite.

11/ Procédé selon l'une des revendications précédentes caractérisé par le fait que le minerai mis en oeuvre est un résidu de fabrication d'aimants de type samarium/cobalt ou néodyme/fer/bore.

12/ Procédé selon l'une des revendications précédentes, caractérisé par le fait que le minerai mis en oeuvre est un résidu de dissolution de gypse issus de l'attaque sulfurique des minerais de phosphate ou des boues obtenues lors de l'étape de concentration des acides phosphoriques bruts.

13/ Procédé selon l'une des revendications précédentes caractérisé en ce que l'attaque du minerai est réalisée par empâtage du minerai avec de l'acide sulfurique.

14/ Procédé selon l'une des revendications 1 à 12 caractérisé en ce que l'attaque du minerai est réalisée par pulpage du minerai avec de l'acide sulfurique.

15/ Procédé selon l'une des revendications précédentes caractérisé en ce que l'hydroxyde ou le carbonate ajouté pour élever le pH dans l'étape (iii) et/ou préalablement à l'étape (iii) comprend un cation de même nature que celui du sel ajouté à l'étape (ii).

16/ Procédé selon la revendication 15, caractérisé en ce que la phase liquide recueillie après l'étape (iv) est recyclée à l'étape (ii).

17/ Procédé selon l'une des revendications précédentes, caractérisé en ce que la quantité de composé ajouté à l'étape (ii) est suffisante pour avoir un rapport cation du composé / anion sulfate présent dans la masse de lixiviation au moins égal à la stoechiométrie, de préférence supérieur de 10 % à celle-ci.

18/ Procédé selon la revendication 17, caractérisé en ce que le rapport cation du composé / anion sulfate est supérieur de 50 % au rapport stoechiométrique.

19/ Procédé selon l'une des revendications précédentes caractérisé en ce que l'étape (i) d'attaque est réalisée à une température comprise entre 100° C et 400° C.

20/ Procédé selon l'une des revendications précédentes, caractérisé en ce que l'acide sulfurique utilisé pour l'étape (i) est une solution d'acide sulfurique de concentration comprise entre 45 % et 100 %, de préférence entre 75 % et 95 %.

21/ Procédé selon l'une des revendications 1 à 19, caractérisé en ce que l'acide sulfurique utilisé à l'étape (i) d'attaque est un oléum.

22/ Procédé selon l'une des revendications précédentes, caractérisé en ce que la quantité d'acide sulfurique utilisé dans l'étape (i) est au moins égale à la quantité théorique requise pour attaquer les éléments attaquables du minerai.

23/ Procédé selon la revendication 22, caractérisé en ce que la quantité d'acide sulfurique précité est supérieure de 20 % à la quantité théorique, de préférence cet excès est compris entre 5 et 10 % de la quantité théorique.

**Office européen des brevets**

# RAPPORT DE RECHERCHE EUROPEENNE

Numéro de la demande

**EP 90 40 2461**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CH-A-1 901 51  (SOCIETE DE PRODUITS CHIMIQUES DES TERRES RARES) <br> * revendication * <br> — — — | 1 | C 22 B 59/00 |
| A | AT-B-1 676 25  (FATTINGER) <br> * revendication 2 * <br> — — — — — | 1 | |

| | DOMAINES TECHNIQUES RECHERCHES (Int. Cl.5) |
|---|---|
| | C 22 B 59/00 |

Le présent rapport de recherche a été établi pour toutes les revendications

| Lieu de la recherche | Date d'achèvement de la recherche | Examinateur |
|---|---|---|
| Berlin | 19 décembre 90 | SUTOR W |